(19) Europäisches Patentamt
European Patent Office
Office européen des brevets

(11) **EP 1 873 218 A1**

(12) **EUROPEAN PATENT APPLICATION**
published in accordance with Art. 153(4) EPC

(43) Date of publication:
**02.01.2008 Bulletin 2008/01**

(21) Application number: **06745565.9**

(22) Date of filing: **21.04.2006**

(51) Int Cl.:
***C09D 183/04*** *(2006.01)* ***C09D 5/16*** *(2006.01)*
***C09D 7/12*** *(2006.01)* ***C09K 3/18*** *(2006.01)*

(86) International application number:
**PCT/JP2006/308434**

(87) International publication number:
**WO 2006/115209 (02.11.2006 Gazette 2006/44)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.04.2005 JP 2005125152**

(71) Applicant: **Dow Corning Toray Silicone Company, Ltd.**
**Chiyoda-ku, Tokyo 100-0005 (JP)**

(72) Inventors:
- **OGATA, Shiro c/o Sustainable Titania Technology**
  **Shibuya -ku, Tokyo; 1510053 (JP)**
- **SUNAGA, Isamu c/o SUMIKA COLOR Co., Ltd.**
  **Tokyo;1200047 (JP)**
- **KENNOKI, Masakado c/o Dow Corning Toray Co.,**
  **Chiba;2990108 (JP)**
- **MURAMOTO, Naohiro c/o Dow Corning Toray Co.,**
  **Chiba;2990108 (JP)**
- **KITAZATO, Shunji c/o Dow Corning Toray Co., Ltd**
  **Tokyo (JP)**

(74) Representative: **Gillard, Richard Edward**
**Elkington and Fife LLP**
**Prospect House**
**8 Pembroke Road**
**Sevenoaks**
**Kent TN13 1XR (GB)**

(54) **SOLUTION OR DISPERSION FOR BASE SURFACE TREATMENT CONTAINING TITANIUM OXIDE DOPED WITH METAL ELEMENT, METHOD OF TREATING BASE SURFACE WITH THE LIQUID, AND SURFACE-TREATED MATERIAL OBTAINED BY THE METHOD**

(57) A surface-treating agent for imparting both water repellency or unsusceptibility to water absorption and excellent antifouling properties to a surface of a material, especially a material for outdoor use; and a material whose surface has been treated with the surface-treating agent. A solution or dispersion which contains a water repellent or water absorption inhibitor, preferably a water repellent or water absorption inhibitor of the silane, siliconate, silicone, silicone/silane composite, and/or fluorochemical type, and a titanium oxide doped with at least one metal element selected from the group consisting of copper, manganese, nickel, cobalt, iron, and zinc, preferably an amorphous titanium oxide or an amorphous titanium oxide which has been peroxidized at least partly, is used to form, on a surface of a base material and/or in a surface layer thereof, a layer comprising the water repellent or water absorption inhibitor and the titanium oxide doped with at least one metal element selected from the group consisting of copper, manganese, nickel, cobalt, iron, and zinc.

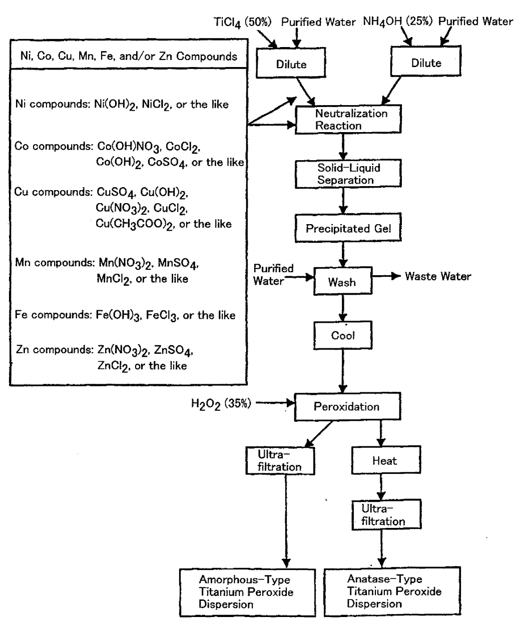


FIG.1

EP 1 873 218 A1

## Description

[Technical Field]

The present invention relates to a treatment solution for use in preparing a surface-treated material having superior unsusceptibility to water absorption and antifouling properties, a method for treating a surface of a substrate by using the aforementioned treatment solution, and a surface-treated material obtained by the aforementioned surface-treating method.
The present application claims priority based on Japanese Patent Application No. 2005-125152 filed on April 22, 2005, which is hereby incorporated by reference.

[Background Art]

Various materials used outdoors, which are used in, for example, architectural structures, have a problem in that the surface of the materials is contaminated by various contaminants included in the atmosphere and rainwater, living organisms such as moss, fungi, and the like, microorganisms, or the like, and thereby, the beauty of the materials is impaired over time. In fact, in architectural structures such as buildings and the like, in order to preserve the beauty of the exterior appearance, surface cleansing must be periodically carried out.
In building materials manufactured from steel framed or reinforced concrete, there was a problem in that the framing or reinforcing steels rust due to penetration of rainwater into the concrete, there was a problem in that the framing or reinforcing steels rust due to penetration of rainwater into the concrete, and volume expansivity of the steel materials caused by rust causes cracking in the concrete. In addition, concrete, itself, has a problem of reduction in strength due to neutralization caused by acidic substances included in rainwater. Even in building materials manufactured from marble stone, there is a problem due to acidic substances in the same manner as described above.
In order to overcome the aforementioned problems, an attempt has been made to prevent water from penetrating into the materials, control adhesion of contaminants on the surface of the building materials and control propagation of moss and the like on the surface of the materials by applying a water repellent substance such as a silicone-based compound and/or a fungicide and/or an antimicrobial agent to the surface of materials such as building materials used outdoors or the like. However, even when the water repellent substance is applied on the surface of the materials, it is not possible to sufficiently prevent contamination of the surface of the materials due to surface contamination or the like caused by deposition of hydrophobic contaminants and the like.
Recently, as an antifouling method for the surface of a material, a method in which a photocatalytic layer is formed on the surface of the material is employed. For example, a method in which a photocatalytic layer such as anatase-type titanium peroxide is further provided on a water repellent layer formed from an alkali metal silicate compound provided on the surface of the material (for example, see Patent Document 1), and a method in which a photocatalytic layer is further provided on a primer layer containing an acrylic resin having an alkoxysilyl group(s) and a hydroxyl group (s) provided on the surface of the material (for example, see Patent Document 2) are proposed. In addition, the present inventors have proposed a titania-metal composite as a material for providing an antifouling titania layer having superior activities (see Patent Document 3).
In the materials used outdoors such as architectural structures, it is required to exhibit superior unsusceptibility to water absorption and antifouling properties, as described above, and at the same time, enable coloring of the surface in order to enhance design of the materials and exhibit durability of the color for a long time.

[Patent Document 1] Japanese Unexamined Patent Application, First Publication No. 2000-135442
[Patent Document 2] Japanese Unexamined Patent Application, First Publication No. 2002-138243
[Patent Document 3] WO 2004/04173

[Disclosure of the Invention]

[Problems to be Solved by the Invention]

Among the aforementioned methods for preventing contamination of the surface of the materials, in the method of further forming a photocatalyst on a water repellent layer formed from an alkali metal silicate compound provided on the surface of the substrate (see the aforementioned Patent Document 1), the photocatalytic layer may be hydrolyzed by means of the alkali metal silicate compound, and in addition, it is difficult to color the alkali metal silicate compound.
In the method of further providing a photocatalytic layer on the primer layer containing the acrylic resin having an alkoxysilyl group(s) and a hydroxyl group(s), provided on the surface of the substrate (see the aforementioned Patent Document 2), it is relatively easy to color the acrylic resin, but there is a problem in that the acrylic resin, per se, is

decomposed and degraded by means of the photocatalyst.

The present invention provides a material for providing a surface layer which has superior unsusceptibility to water absorption and antifouling properties, and can be easily colored, on the surface of substrates used outdoors, such as substrates for use in architecture or civil engineering, provides a method for treating the surface of a substrate using the aforementioned material, and provides a surface-treated substrate in which a surface treatment is carried out by means of the aforementioned method, and a surface layer which can exhibit superior unsusceptibility to water absorption and antifouling properties, and which can be easily colored, if necessary.

[Means for Solving the Problems]

The material employed in the surface treatment of the substrate in the present invention is a solution or a dispersion characterized by comprising: a water repellent or a water-absorption inhibitor; and a titanium oxide doped with at least one metal element selected from the group consisting of copper, manganese, nickel, cobalt, iron, and zinc.

In addition, the water repellent or the water-absorption inhibitor employed in the aforementioned solution or dispersion is preferably a silane-based, siliconate-based, silicone-based, or silicone and silane composite-based, and/or fluorine-based water repellent or water-absorption inhibitor. In addition, the aforementioned titanium oxide doped with the metal element is preferably an amorphous-type titanium oxide and/or an amorphous-type titanium oxide which is peroxidized at least partly.

The aforementioned solution or dispersion can contain an aqueous pigment dispersion comprising pigments, water, and at least one dispersant selected from the group consisting of nonionic dispersants, anionic dispersants, amphoteric dispersants, water-soluble resin dispersants having an acid value ranging from 50 to 250, and emulsion resin dispersants having an acid value ranging from 50 to 250.

The aforementioned solution or dispersion can further contain an organic resin binder, if necessary.

The method for treating the surface of the substrate of the present invention is characterized in that a layer containing the aforementioned water repellent or water-absorption inhibitor, as well as, the titanium oxide doped with at least one metal element selected from the group consisting of copper, manganese, nickel, cobalt, iron, and zinc is provided on the surface of the aforementioned substrate and/or in the surface layer of the substrate by applying one of the aforementioned solution and dispersion to the substrate.

The surface-treated material of the present invention is characterized in that the surface-treated material is prepared by using the aforementioned surface-treatment method, and a layer containing the water repellent or water-absorption inhibitor, as well as, the titanium oxide doped with at least one metal element selected from the group consisting of copper, manganese, nickel, cobalt, iron, and zinc is provided on the surface of the substrate and/or in the surface layer of the substrate.

The present inventors discovered that by employing the solution or dispersion containing the water repellent or the water-absorption inhibitor together with the titanium oxide doped with the aforementioned specified metal element, a layer containing the aforementioned titanium oxide and the water repellent or water-absorption inhibitor is provided on the surface of the substrate or in the surface layer of the substrate, and thereby, it is difficult to contaminate the surface of the substrate, water absorption to the substrate can be prevented, and design of the surface of the substrate can be enhanced since it is easy to color the surface of the substrate, thus completing the present invention.

[Best Modes for Carrying Out the Invention]

In the present invention, the solution or dispersion containing the water repellent or the water-absorption inhibitor, together with the titanium oxide doped with the aforementioned specified metal element is applied to the surface of the substrate, a layer containing the aforementioned water repellent or water-absorption inhibitor, as well as, the aforementioned titanium oxide is provided on the surface of the substrate and/or in the surface layer of the substrate. When the substrate is non-porous, such as glass, metals, or the like, the aforementioned layer is provided on the surface of the substrate. When the substrate is porous, such as concrete or the like, the aforementioned solution or dispersion slightly penetrates into the inner part from the surface of the substrate, and for this reason, the aforementioned layer is, in general, provided on the surface of the substrate and in the surface layer of the substrate. The substrates which the present invention covers are not particularly limited. As examples of non-porous substrates, mention may be made of, in addition to the aforementioned glass and metals, stone, plastics, rubbers, sealing materials, glazed tiles, and the like. As examples of porous substrates, mention may be made of, in addition to the aforementioned concrete, wood, mortar, porous stone, vitreous tiles, and the like. The substrate which the present invention covers is, in particular, preferably concrete.

The preparation for treating the surface of the substrate of the present invention contains the titanium oxide doped with the aforementioned specified metal element, and the aforementioned water repellent or water-absorption inhibitor, as essential components. In the following, the titanium oxide doped with the specified metal element is described,

and then, the water repellent or water-absorption inhibitor is described.

As the solution or dispersion containing the titanium oxide doped with the aforementioned specified metal element (hereinafter, also referred to as "specified metal-doped titanium oxide") employed in the present invention, those described in WO 2004/041723 can be employed. In addition, more particularly, in the specification of the present application, the specified metal-doped titanium oxide contained in the aforementioned solution or dispersion means a compound containing at least one metal element selected from the group consisting of copper, manganese, nickel, cobalt, iron, and zinc and compounds thereof; and a titanium oxide or a titanium oxide which is peroxidized at least partly. As examples of the titanium compound which is a base compound of the titanium oxide which is peroxidized at least partly, mention may be made of reaction products obtained by reacting various titanium oxides such as $TiO_2$, $TiO_3$, TiO, $TiO_3/nH_2O$, and the like and titanium hydroxide with peroxides. In addition, the crystalline type of the titanium oxide may be amorphous-type, anatase-type, brookite-type, or rutile-type, or alternatively a mixed-type thereof. In particular, an amorphous-type titanium oxide is preferable since superior film-forming properties and superior adhesiveness to substrates are exhibited.

As a method for preparing a solution or dispersion containing the specified metal-doped titanium oxide, the following methods can be mentioned.

Preparation Method 1

A compound of tetravalent titanium such as titanium tetrachloride or the like and a base such as ammonia or the like are reacted together, and thereby, titanium hydroxide is synthesized. Subsequently, the obtained titanium hydroxide is peroxidized with an oxidizing agent to synthesize ultra-fine particles of an amorphous-type titanium peroxide which is peroxidized at least partly (hereinafter, the titanium oxide which is peroxidized at least partly is also referred to as "peroxidized titanium oxide"). The aforementioned reaction is preferably carried out in an aqueous medium. The obtained amorphous-type peroxidized titanium oxide can be converted into anatase-type peroxidized titanium oxide by heating, if necessary. In the present invention, as described above, in particular, the amorphous-type titanium oxide is preferably employed. In any of the steps for preparing the aforementioned peroxidized titanium oxide, at least one of copper, manganese, nickel, cobalt, iron, zinc, and compounds thereof is added to the reaction mixture, and thereby, the specified metal-doped titanium oxide which is peroxidized at least partly can be obtained.

The oxidizing agent for use in peroxidizing titanium oxide is not particularly limited, as long as the oxidizing agent can produce a peroxide of titanium, i.e., titanium peroxide. In particular, hydrogen peroxide is preferable. In the present invention, hydrogen peroxide having a concentration ranging from 30 to 40% by weight is particularly preferable. In addition, in the case of carrying out peroxidation of titanium hydroxide, a solution containing titanium hydroxide is preferably cooled before the reaction. The cooling temperature preferably ranges from 1 to 5˚C.

The aforementioned Preparation Method 1 is described based on FIG. 1. FIG. 1 is a scheme showing an outline of an example of Preparation Method 1. As shown in FIG. 1, an aqueous solution of titanium tetrachloride and aqueous ammonia are mixed together in the presence of at least one compound of copper, manganese, nickel, cobalt, iron, or zinc, and titanium tetrachloride and the other metal compound are hydrolyzed. Thereby, hydroxides of titanium and the other metal are obtained. Here, there are no particular limitations on the concentration of each of the raw materials contained in the reaction mixture or temperature of the reaction mixture, as long as the desirable reaction products can be obtained. Since good stability of the dispersion is exhibited, the concentration of each of the raw materials is preferably reduced, and the reaction temperature is preferably room temperature. The aforementioned reaction is a neutralization reaction, and therefore, it is preferable to finally adjust the pH of the reaction mixture to approximately pH 7. The adjustment of the pH can be carried out by, for example, adjusting the amount of the added aqueous ammonia. In this case, the metal compound other than titanium compound can be added before and/or during the neutralization reaction which is carried out by adding aqueous ammonia.

The mixture of metal hydroxides obtained by the aforementioned neutralization reaction is separated from the solution, and washed with purified water, followed by cooling. The cooling temperature is preferably approximately 5˚C, but is not particularly limited. Subsequently, the aqueous dispersion of the mixture of the metal hydroxides is peroxidized with hydrogen peroxide. By the aforementioned reaction, a solution or dispersion containing fine particles of an amorphous-type titanium oxide which is doped with at least one metal element selected from the group consisting of copper, manganese, nickel, cobalt, iron, and zinc, and which is peroxidezed at least partly, can be obtained. The obtained dispersion is further subjected to ultrafiltration, and thereby, a dispersion containing the ultra-fine particles can be obtained.

Preparation Method 2

A compound of tetravalent titanium such as titanium tetrachloride or the like is peroxidized with an oxidizing agent, followed by carrying out a neutralization reaction with a base such as ammonia or the like, and thereby, ultra-fine particles of an amorphous-type titanium oxide which is peroxidized at least partly (i. e., amorphous-type titanium peroxide) are synthesized. The aforementioned reaction is preferably carried out in an aqueous medium. In addition, by further carrying out a heat treatment, the amorphous-type titanium peroxide can also be converted into an anatase-type titanium peroxide. In any one of the aforementioned peroxidizing step and the aforementioned neutralization step, at least one of copper, manganese, nickel, cobalt, iron, zinc, and compounds thereof is mixed therein, and thereby, a solution or dispersion containing the specified metal-doped titanium oxide of the present invention can be obtained.

Preparation Method 3

A compound of tetravalent titanium such as titanium tetrachloride or the like is reacted together with an oxidizing agent such as hydrogen peroxide or the like and a base such as ammonia or the like in the presence of at least one of copper, manganese, nickel, cobalt, iron, zinc, and compounds thereof. Thereby, hydrolysis of the metal compound and the compound of tetravalent titanium and peroxidation of the titanium compound are carried out at the same time, thus obtaining a solution or dispersion containing the specified metal-doped titanium oxide of the present invention. In this case, by further carrying out a heat treatment, the amorphous-type titanium peroxide can also be converted into an anatase-type titanium peroxide, if necessary.

As the compounds of tetravalent titanium employed in the aforementioned Preparation Methods 1 to 3, various titanium compounds can be employed as long as titanium hydroxide, also known as ortho-titanic acid ($H_4TiO_4$), can be formed upon reacting with a base. As examples thereof, mention may be made of, for example, water-soluble inorganic titanium salts such as titanium tetrachloride, titanium sulfate, titanium nitrate, titanium phosphate, and the like; and water-soluble titanium salts of organic acid such as titanium oxalate, and the like. Among the various compounds described above, titanium tetrachloride is preferable since superior water solubility is exhibited, and the content of unnecessary impurities contained in the obtained specified metal-doped titanium oxides can be reduced.

In the aforementioned Preparation Methods 1 to 3, the concentration of the compound of tetravalent titanium at the time of reacting with the base is not particularly limited, as long as the produced titanium hydroxide can form a gel. In order to avoid unreacted materials remaining, a relatively dilute solution is preferable. More particularly, the concentration of the compound of tetravalent titanium in the solution preferably ranges from 5 to 0.01% by weight, and more preferably ranges from 0.9 to 0.3% by weight. By reacting the compound of tetravalent titanium within the concentration ranges with a base, a titanium hydroxide dispersion or gel having good dispersing properties can be obtained.

The base employed in the aforementioned Preparation Methods 1 to 3 is not particularly limited, as long as a titanium hydroxide gel can be produced from the employed compound of tetravalent titanium. As examples of the base, mention may be made of ammonia, sodium hydroxide, sodium carbonate, and potassium hydroxide. In particular, ammonia is preferable. The aforementioned base is usually added as a solution such as an aqueous solution, to the aforementioned solution or dispersion of the compound of tetravalent titanium. In this case, the concentration of the solution of the base is not particularly limited, as long as a gel of titanium hydroxide can be formed, but a relatively dilute solution is preferable. More particularly, the concentration of the solution of the base preferably ranges from 10 to 0.01% by weight, and more preferably ranges from 1.0 to 0.1% by weight. In particular, in the case of employing aqueous ammonia as the solution of the base, the concentration of ammonia preferably ranges from 10 to 0.01% by weight, and more preferably ranges from 1.0 to 0.1% by weight, in order to avoid an excessive amount of ammonium ions remaining.

As examples of compounds of copper, manganese, nickel, cobalt, iron, or zinc employed in the aforementioned Preparation Methods 1 to 3, mention may be made of the compounds described below.

Ni compounds: $Ni(OH)_2$, $NiCl_2$;

Co compounds: $Co(OH)NO_3$, $Co(OH)_2$, $CoSO_4$, $CoCl_2$;

Cu compounds: $Cu(OH)_2$, $Cu(NO_3)_2$, $CoSO_4$, $CoCl_2$, $Cu(CH_3COO)_2$;

Mn compounds: $MnNO_3$, $MnSO_4$, $MnCl_2$;

Fe compounds: $Fe(OH)_2$, $Fe(OH)_3$, $FeCl_3$;

Zn compounds: $Zn(NO_3)_2$, $ZnSO_4$, $ZuCl_2$.

The concentration of the solid content of the solution or dispersion of the specified metal-doped titanium oxide of the present invention obtained by means of the aforementioned Preparation Methods 1 to 3 (total concentration of the titanium compounds and the specified metal compounds contained in the solution or dispersion) preferably ranges from 0.05 to 15% by weight, and more preferably ranges from 0.1 to 5% by weight, in order to obtain the solution or

dispersion having good stability. In addition, the molar ratio of titanium and other specified metals contained in the aforementioned solution or dispersion preferably ranges from 1:0.01 to 1:0.5, and more preferably ranges from 1:0.03 to 1:0.1, since a surface-treated substance obtained by a surface treatment with the aforementioned solution or dispersion can exhibit good antifouling properties and the like.

Preparation Method 4: Preparation Method Using Sol-Gel Method

A titanium alkoxide, a solvent such as water, an alcohol, or the like, and a solution containing an acid or base catalyst are mixed and stirred to hydrolyze the titanium alkoxide. Thereby, a sol solution of ultra-fine particles of titanium oxide is produced. Before, during, or after the aforementioned hydrolysis reaction, at least one of copper, manganese, nickel, cobalt, iron, zinc, and compounds thereof is added to the aforementioned solution or sol solution. Thereby, a solution or dispersion containing the specified metal-doped titanium oxide of the present invention can be obtained.

As the titanium alkoxide employed in the aforementioned Preparation Method 4, a compound represented by the general formula: $Ti(OR')_4$, wherein R' is an alkyl group, or a compound in which one or two OR' groups in the aforementioned general formula have been substituted with carboxyl groups or beta-dicarbonyl groups, or a mixture thereof is preferable. As examples of the aforementioned titanium alkoxide, mention may be made of, for example, $Ti(O\text{-}iso\text{-}C_3H_7)_4$, $Ti(O\text{-}n\text{-}C_4H_9)_4$, $Ti(O\text{-}CH_2CH(C_2H_5)C_4H_9)_4$, $Ti(O\text{-}C_{17}H_{35})_4$, $Ti(O\text{-}iso\text{-}C_3H_7)_2[CO(CH_3)CHCOCH_3]_2$, $Ti(O\text{-}nC_4H_9)_2[OC_2H_4N(C_2H_4OH)_2]_2$, $Ti(OH)_2[OCH(CH_3)COOH]_2$, $Ti(OCH_2CH(C_2H_5)CH(OH)C_3H_7)_4$, and $Ti(O\text{-}nC_4H_9)_2(OCOC_{17}H_{35})$.

The aforementioned sol-gel method of Preparation Method 4 is known as a method of synthesizing a metal oxide. Even in the case of preparing the specified metal-doped titanium oxide of the present invention, the sol gel method can be carried out using a conventional method and a necessary compound such as an acid or base.

In addition, the compound of copper, manganese, nickel, cobalt, iron, or zinc which is employed in preparing the specified metal-doped titanium oxide of the present invention by means of the sol-gel method is the same as the compound employed in the aforementioned Preparation Methods 1 to 3. In addition, the preferable concentration of the solid content of the specified metal-doped titanium oxide of the present invention of the solution or dispersion prepared by means of the sol-gel method (total concentration of the titanium compounds and the specified metal compounds contained in the solution or dispersion), and the molar ratio of titanium and other specified metals contained in the solution or dispersion are respectively the same as the concentration and the molar ratio described in Preparation Methods 1 to 3.

In addition, the specified metal-doped titanium oxide of the present invention can also be prepared by a method in which an "organic titanium peroxy compound" described in the specification of Japanese Unexamined Patent Application, First Publication No. 2000-159786 and the aforementioned specified metal compound are mixed and dissolved in water, and the obtained solution is concentrated to make a gel. In addition, the specified metal-doped titanium oxide of the present invention can also be prepared by employing a water-soluble mixture comprising a "titanium complex" and a "complex of metal" other than titanium, described in the specification of Japanese Unexamined Patent Application, First Publication No. 2001-10816 as starting raw materials.

Water repellent or Water-Absorption Inhibitor

The solution or dispersion for use in treating the surface of a substrate of the present invention is characterized by comprising a water repellent or a water-absorption inhibitor, together with the aforementioned specified metal-doped titanium oxide. As the water repellent or the water-absorption inhibitor employed in the present invention, silane-based, siliconate-based, silicone-based, silicone/silane composite-based or fluorine-based water repellents or water-absorption inhibitors are preferable. The aforementioned materials are referred to as water repellents when they are applied to the surface of a non-porous substrate; and the aforementioned materials are referred to as water-absorption inhibitors when they are applied to the surface of a porous substrate, since water absorption to the substrate can be prevented.

The silane-based, siliconate-based, silicone-based, silicone/silane composite-based or fluorine-based water repellent or water-absorption inhibitor employed in the present invention means a material which can form a superior film having durability on some level by the fact in that the chemical components of the water repellent or water-absorption inhibitor can react with the substrate to form chemical bonds, or that the chemical components are crosslinked to each other. The aforementioned materials immediately exhibit water repellency or unsusceptibility to water absorption. Therefore, water repellency or unsusceptibility to water absorption with respect to the substrate can be maintained for a long time, and superior weather resistance is exhibited. Therefore, the aforementioned materials are advantageous.

As the silane-based, siliconate-based, silicone-based, silicone/silane composite-based and/or fluorine-based water repellent or water-absorption inhibitor, various ones are known. In the present invention, any one thereof can be employed, and two or more types thereof can be employed together. In the present invention, the silane-based, siliconate-based, silicone-based, or silicone/silane composite-based water repellent or water-absorption inhibitor is preferably employed. Among these, as the particularly preferable water repellent or water-absorption inhibitor of the present invention, a silane-based water repellent or water-absorption inhibitor comprising a hydrolyzable silane, water, and a surfactant; a silicone/silane composite-based water repellent or water-absorption inhibitor containing the aforementioned silane-based one, a hydrolysate and/or partial hydrolysate of a hydrolyzable silane, and a compound selected from various organopolysiloxanes; and a siliconate-based water repellent or water-absorption inhibitor comprising an aqueous solution of an alkali metal organosiliconate.

As the hydrolyzable silane employed in the aforementioned silane-based water repellent or water-absorption inhibitor, various ones are known. As examples thereof, mention may be made of, for example, tetraalkoxysilane, alkyltrialkoxysilane, dialkyldialkoxysilane, and trialkylalkoxysilane. One type or two or more types selected therefrom can be employed. The aforementioned surfactant is not particularly limited, and an anionic surfactant, a cationic surfactant, a nonionic surfactant, and a mixture thereof can be employed.

As examples of the aforementioned silicone/silane composite-based water repellent or water-absorption inhibitor, one containing the aforementioned hydrolyzable silane, a surfactant, and the hydrolysate and/or partially hydrolyzed product of the aforementioned hydrolyzable silane; and one containing the aforementioned hydrolyzable silane, a surfactant, and a compound selected from various organopolysiloxanes. As the aforementioned various organopolysiloxanes, organopolysiloxanes having a hydrolyzable group selected from an alkoxy group, an alkenoxy group, an amino group, an amide group, an acetoxy group, a ketoxime group, and the like, which is bonded to a silicon atom can be employed.

As examples of the aforementioned silicone/silane composite-based water repellent or water-absorption inhibitor, mention may be made of compositions described in Japanese Unexamined Patent Application, First Publication No. S62-197369 or Japanese Unexamined Patent Application, First Publication No. H06-313167. The particularly preferable silane-based water repellent or water-absorption inhibitor employed in the present invention is an aqueous composition, and comprises (A) an organoalkoxysilane represented by the general formula: $R^1{}_aSi(OR^2)_{4-a}$, wherein $R^1$ represents the same or different monovalent hydrocarbon group having 1 to 20 carbon atoms; $R^2$ represents a monovalent hydrocarbon group having 1 to 3 carbon atoms; and "a" is 1 or 2, in an amount of 100 parts by weight; (B) an organosiloxane having at least one organic group, per molecule, which is bonded to a silicon atom and is represented by general formula: $-R^3-Si(R^4)_b(OR^2)_{3-b}$, wherein $R^2$ represents a monovalent hydrocarbon group having 1 to 3 carbon atoms; $R^3$ represents a divalent hydrocarbon group; $R^4$ represents the same or different monovalent hydrocarbon group; and b is 0, 1, or 2, in an amount ranging from 1 to 200 parts by weight; and (C) an anionic surfactant, and (D) water.

As examples of $R^1$ of the organoalkoxysilane of the aforementioned component (A), mention may be made of an alkyl group such as a methyl group, an ethyl group, a propyl group, a tert-butyl group, a pentyl group, an n-hexyl group, a heptyl group, a 2-ethylhexyl group, an octyl group, a dodecyl group, an octadecyl group, or the like; an aryl group such as a phenyl group, a tolyl group, a xylyl group, a naphthyl group, or the like; an aralkyl group such as a benzyl group, a phenethyl group, or the like; and a substituted alkyl group such as a fluoromethyl group, a 3,3,3-trifluoropropyl group, a 3,3,4,4,5,5-heptafluoropentyl group, a difluoromonochloropropyl group, or the like. Among these, in particular, an alkyl group having 4 to 10 carbon atoms is preferable. When the alkyl group has 4 or more carbon atoms, water repellency as a water repellent can be enhanced. When the alkyl group has 10 or less carbon atoms, permeability to a porous substrate can be enhanced. As examples of $R^2$ of the aforementioned organoalkoxysilane, mention may be made of a methyl group, an ethyl group, and a propyl group. The organoalkoxysilanes can be employed alone or in combination of two or more types thereof. When the aforementioned water repellent or water-absorption inhibitor is applied to the surface of a porous substrate such as an inorganic substrate (in particular, an architectural material such as concrete), the aforementioned component (A) can permeate into inside of the substrate and chemically bind to the substrate, and thereby a water repellent layer in the surface layer of the substrate can be provided.

The embodiments of substituents of the aforementioned organic groups bonded to the organosiloxane of the aforementioned component (B) are described below. $R^2$ is the same as $R^2$ of the aforementioned component (A). $R^3$ is a divalent hydrocarbon group, and as examples thereof, mention may be made of an alkylene group such as an ethylene group, an n-propylene group, an isopropylene group, an isobutylene group, and the like. $R^4$ is the same or a different monovalent hydrocarbon group, and as examples thereof, mention may be made of, for example, an alkyl group such as a methyl group, an ethyl group, a propyl group, an octyl group, a decyl group, a dodecyl group, or the like; an aryl group such as a phenyl group, a naphthyl group, a tolyl group, or the like; an aralkyl group such as a 2-phenylethyl group, a 2-phenylpropyl group, or the like; and a halogenated alkyl group such as a 3,3,3-trifluoropropyl group, or the like. "b" is preferably 0 or 1. The aforementioned organic group can be present only at the terminal of the molecular chain of the organosiloxane, only at the side chain, or at both the terminal and the side chain. As examples of organic groups which the organosiloxane of component (B) has, in addition to the organic groups represented by the aforementioned structural formula, mention may be made of the same or different monovalent hydrocarbon groups, and in particular, a methyl group, and an alkyl group having 4 or more carbon atoms are preferable. The organosiloxane of the aforementioned component (B) can be linear, branched and/or cyclic, and in particular, is preferably linear. In addition, component (B) may be a homopolymer, a block copolymer, or a random copolymer.

As examples of the aforementioned component (B), mention may be made of, for example, an organopolysiloxane represented by the formula described below:

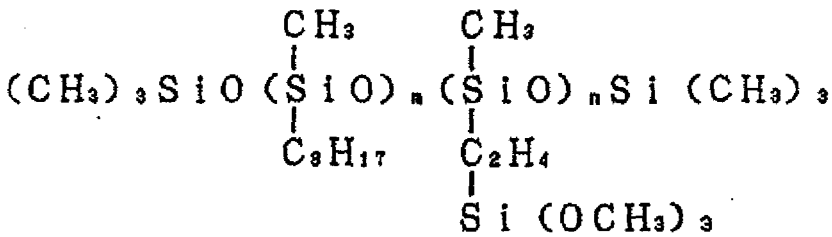

wherein m represents a number of 0 or more; n represents a number which is 1 or more, and m + n is a number ranging from 1 to 50. By setting (m + n) in the formula to one or more, but 50 or less, permeability into the inside of the porous substrate can be enhanced. With respect to 100 parts by weight of the aforementioned component (A), the aforementioned component (B) is preferably employed in an amount preferably ranging from 1 to 200 parts by weight, and more preferably ranging form 10 to 100 part by weight. By setting the amount of component (B) employed to one or more parts by weight, storage stability of the mixture can be enhanced. By setting the amount of component (B) to 200 or less parts by weight, the amount of the aforementioned component (A) is increased, and water repellency due to the surface layer provided in the case of applying to a porous substrate can be enhanced.

The anionic surfactant of the aforementioned component (C) is a component for emulsifying the aforementioned components (A) and (B). As preferable examples of the anionic surfactant, mention may be made of a sodium salt, a potassium salt, a lithium salt, or an amine salt of an acid selected from an alkylbenzene sulfonic acid such as octylbenzene sulfonic acid, dodecylbenzene sulfonic acid, cetylbenzene sulfonic acid, or the like; a fatty alcohol sulfate; a polyoxyethylene alkyl ether sulfate; a polyoxyethylene alkyl phenyl ether sulfate; and an alkyl naphthyl sulfonic acid.

With respect to 100 parts by weight of the aforementioned component (A) and component (B) in total, component (C) is employed in an amount preferably ranging from 0.1 to 50 parts by weight, and more preferably ranging from 0.1 to 10 parts by weight. The amount of water of the aforementioned component (D) employed is preferably set so that the total amount of the aforementioned component (A) and component (B) ranges from 5 to 60% by weight of the total amount of the components (A) to (D). The aqueous water repellent or water-absorption inhibitor obtained by emulsifying the mixture described above is, in particular, preferable as the water repellent or water-absorption inhibitor employed in the present invention. As examples of commercially available products of the preferable water repellent or water-absorption inhibitor, mention may be made of Dryseal S (product name, manufactured by Dow Corning Toray Silicone Co., Ltd.).

As the aforementioned siliconate-based water repellent or water-absorption inhibitor, known products can be employed. As examples thereof, mention may be made of an aqueous solution of an alkaline metal salt of a alkylsiliconate such as an aqueous solution of sodium methyl siliconate, an aqueous solution of sodium propyl siliconate, an aqueous solution of potassium methyl siliconate, an aqueous solution of potassium propyl siliconate, or the like; and an aqueous solution of an alkaline metal amino-organofunctional siliconate described in Japanese Unexamined Patent Application, First Publication No. H05-214251. As commercially available products of the aforementioned siliconate-based water repellent or water-absorption inhibitor, there are Dryseal C and Dryseal E (both product names, manufactured by Dow Corning Toray Silicone Co., Ltd.).

In addition, as examples of the silicone-based water repellent or water-absorption inhibitor, mention may be made of a silicone resin-based water repellent or the water-absorption inhibitor which is curable at room temperature, comprising a silicone resin having a hydrolyzable group such as an alkoxy group or a hydroxyl group; a diorganopolysiloxane containing a hydroxysilyl group; and a silane containing a hydrolyzable group or an organopolysiloxane containing a hydrolyzable group (with the proviso that a hydroxyl group is excluded), such as

an aqueous silicone emulsion composition which is curable at room temperature by removing moisture, and provides a cured product in the form of an elastomer, such as a silicone emulsion comprising a diorganopolysiloxane containing a hydroxyl group which is anionically stabilized, a colloid silica, and a curing catalyst, described in Japanese Unexamined Patent Application, First Publication No. S58-118853 or Japanese Unexamined Patent Application, First Publication No. S60-96650, or a silicone emulsion comprising a diorganopolysiloxane containing an alkoxy group which is ionically or nonionically stabilized, and a titanium catalyst, described in Japanese Unexamined Patent Application, First Publication No. H07-150045;

a silicone resin composition which is curable at room temperature, described in Japanese Unexamined Patent Application,

First Publication No. S55-48243, which is characterized by comprising

(i) an organopolysiloxane resin represented by an average unit formula: $R'_1SiO_{(4-l-k)/2}(OH)_k$, wherein R' represents a substituted or non-substituted monovalent hydrocarbon group; 1 is a number ranging form 0.80 to 1.80; and k is a value so that a ratio of the hydroxyl group bonded to a silicon atom in the compound is 0.01% by weight or more;
(ii) an alpha,omega-dihydroxydiorganopolysiloxane represented by general formula: $HO-(R^5{}_2SiO)_q-H$, wherein $R^5$ represents a substituted or non-substituted monovalent hydrocarbon group; and q is an integer of 2 or more; and
(iii) a silicon compound represented by general formula: $R^6{}_cSiX_{4-c}$, wherein c is 0, 1, or 2; and X is a hydrolyzable group, or a partially hydrolyzed condensate thereof,

and an aqueous silicone emulsion resin described in Japanese Unexamined Patent Application, First Publication No. H06-73291, which is characterized by comprising:

(A) an organopolysiloxane containing an $SiO_{4/2}$ unit or an $R^7SiO_{3/2}$ unit, wherein an amount of a hydroxyl group bonded to a silicon bond or an alkoxy group bonded to a silicon atom in a molecule is 0.1% by weight or more;
(B) a diorganopolysiloxane represented by general formula: $HO(R^8{}_2SiO)_pH$, wherein $R^8$ represents a monovalent hydrocarbon group; and p is an integer of 2 or more;
(C) an organic silicon compound containing an aminooxy group represented by general formula: $R^9{}_2NO(R^{10}SiO)_rNR^9$, wherein $R^9$ and $R^{10}$ represent a monovalent hydrocarbon group; and r represents an integer of 1 or more;
(D) a surfactant; and
(E) water,

and the like.

In addition, the fluorine-based water repellent or water-absorption inhibitor employed in the present invention means a fluorine-containing compound such as a compound containing a perfluoroalkyl group or the like, or a composition containing a fluorine-containing compound. When a fluorine-containing compound having high absorptivity to the surface of the substrate is selected, after applying to the surface of the substrate, it is not always necessary that the chemical components of the water repellent or water-absorption inhibitor react with the substrate, and thereby a chemical bond may be formed, or the chemical components may crosslink each other.

As the fluorine-containing compound which can be employed as the aforementioned fluorine-based water repellent or water-absorption inhibitor is preferably one containing a perfluoroalkyl group in a molecule and having a molecular weight ranging from 1,000 to 20,000. As examples thereof, mention may be made of perfluorosulfonate, perfluorosulfonic acid ammonium salt, perfluorocarboxylate, perfluoroalkyl betaine, perfluoroalkyl ethylene oxide adduct, perfluoroalkyl amine oxide, perfluoroalkyl phosphate, perfluoroalkyl trimethylammonium salt, and the like. Among these, perfluoroalkyl phosphate and perfluoroalkyl trimethylammonium salt are preferable. These materials are commercially available as Surflon S-112 and Surflon S-121 (both product names, manufactured by Seimi Chemical Co., Ltd.), and the like.

As examples of other fluorine-based water repellents or water-absorption inhibitors, mention may be made of compositions comprising a fluorine resin emulsion comprising a surfactant, at least one fluorine resin selected from the group consisting of mixtures of thermoplastic acrylic resins and copolymers formed from two or more olefins containing fluorine atoms, copolymers between olefins containing fluorine atoms and hydrocarbon monomers, and copolymers containing two or more olefins containing fluorine atoms, and compositions comprising hardening agents (see Japanese Unexamined Patent Application, First Publication No. H05-124880; Japanese Unexamined Patent Application, First Publication No. H05-117578; and Japanese Unexamined Patent Application, First Publication No. H05-179191) and/or the aforementioned silane-based water repellents or water-absorption inhibitors (see Japanese Unexamined Patent Application, First Publication No. 2000-121543; and Japanese Unexamined Patent Application, First Publication No. 2003-26461). As the fluorine resin emulsions, commercially available products can be employed. Zeffle series are available from Daikin Industries Ltd., and Lumiflon series are available from Asahi Glass Co., Ltd. As the aforementioned hardening agents, a melamine-based hardening agent, an amine-based hardening agent, a polyisocyanate-based hardening agent, and a block polyisocyanate-based hardening agent are preferably employed. In particular, the polyisocyanate-based hardening agent is preferable since hardening can occur at room temperature, and therefore, site operation can be carried out.

The first objective of the present invention is to provide a solution or dispersion for use in treating the surface of a substrate in order to provide superior water repellency or unsusceptibility to water absorption and antifouling properties to the surface of a substrate, as described above (hereinafter, also simply referred to as surface treatment liquid for a substrate). In addition, the aforementioned surface treatment liquid for a substrate is a solution or dispersion comprising the aforementioned water repellent or water-absorption inhibitor, together with the aforementioned specified

metal-doped titanium oxide. The solution or dispersion can be obtained by mixing a solution or dispersion containing the aforementioned specified metal-doped titanium oxide with the aforementioned water repellent or water-absorption inhibitor.

In the surface treatment liquid for a substrate of the present invention, an aqueous dispersion of pigments can be blended in order to enhance design of the surface of the substrate, if necessary. The pigments employed in the present invention are not particularly limited. Inorganic pigments and organic pigments can be employed, and inorganic or organic pigments may be employed alone or the inorganic and organic pigments may be employed together. It was surprisingly discovered that in a layer formed on the surface of the substrate or in the surface layer of the substrate using the surface treatment liquid for a substrate to which pigments and/or dye are added, even in the case of using organic pigments and/or dye, the effects in which discoloration of the dye and/or pigments can be reduced are exhibited.

The aforementioned aqueous dispersion of pigments is not particularly limited as long as pigments are uniformly and stably dispersed in water. As the aqueous dispersion of pigments, a conventional dispersion obtained by dispersing the pigments in water with a dispersant by means of a dispersing device can be employed.

Among the aforementioned pigments, as examples of inorganic pigments, mention may be made of metal oxide-based pigments, composite oxide-based pigments, chromate-based pigments, sulfide-based pigments, phosphate-based pigments, metal complex-based pigments, carbon black, metal powders, heat-sensitive pigments, light storage pigments, pearl pigments, basic pigments, white lead, and the like. In addition, as examples of organic pigments, mention may be made of azo-based pigments, phthalocyanine-based pigments, anthraquinone-based pigments, quinacridone-based pigments, indigo-based pigments, dioxazine-based pigments, perylene-based pigments, perinone-based pigments, isoindolinone-based pigments, isoindoline-based pigments, metal complex-based pigments, quinophthalone-based pigments, diketopyrrolopyrrole-based pigments, alkali blue, aniline black, fluorescent pigments, and the like. The aforementioned pigments can be employed alone or in combination with two or more types thereof.

As examples of the dispersant employed in the case of obtaining the aqueous dispersion of pigments by dispersing the pigments in water, mention may be made of a nonionic dispersant, an anionic dispersant, an amphoteric dispersant, a water-soluble resin dispersant having an acid value ranging from 50 to 250, an emulsion resin dispersant having an acid value ranging from 50 to 250, and the like. The aforementioned dispersants can be employed alone or in combination with two or more types thereof.

As examples of the aforementioned nonionic dispersant, mention may be made of a polyoxyethylene alkyl ether, a polyoxyethylene alkyl aryl ether, a polyoxyethylene polyoxypropylene block polymer, a sorbitan fatty acid ester, a polyoxyethylene sorbitan fatty acid ester, a polyoxyethylene sorbitol fatty acid ester, a glycerol fatty acid ester, a polyoxyethylene fatty acid ester, and the like.

As examples of the aforementioned anionic dispersant, mention may be made of a fatty acid salt, an alkylsulfate, an alkylarylsulfonate, an alkylnaphthalene sulfonate, a dialkylsulfosuccinate, an alkyldiaryl ether disulfonate, an alkylphosphate, a polyoxyethylene alkyl ether sulfate, a polyoxyethylene alkyl aryl ether sulfate, a naphthalenesulfonic acid formalin condensate, a polyoxyethylene alkyl phosphoric ester salt, a polyoxyethylene glycerol fatty acid ester salt, a glycerol borade fatty acid ester salt, sodium tripolyphosphate, and the like. Among these, blending of the aforementioned sodium tripolyphosphate and the aforementioned anionic dispersant other than sodium tripolyphosphate is preferable since effective improvements on stability of the aqueous dispersion of pigments can be obtained.

As examples of the aforementioned amphoteric dispersant, mention may be made of, an alkylbetaine, an alkylamine oxide, lecithin, and the like.

As examples of the aforementioned water-soluble resin dispersant having an acid value ranging from 50 to 250, mention may be made of an acrylic resin, an acryl styrene resin, a styrene maleic acid resin, and the like. As examples of the emulsion resin dispersant having an acid value ranging from 50 to 250, mention may be made of an acryl emulsion resin, an acryl styrene emulsion resin, and the like.

The usage amount of the aforementioned dispersant preferably ranges from 0.1 to 100 parts by weight with respect to 100 parts by weight of pigments, and more preferably ranges from 0.1 to 60 parts by weight.

In the aforementioned aqueous dispersion of pigments, in addition to the aforementioned pigments, the aforementioned dispersant, and water, one or more materials selected from a water-soluble solvent, a moisturizer, a thickening agent, a defoaming agent, preservatives, and the like can be included, if necessary.

In the aforementioned surface treatment liquid for a substrate, it is also possible to add a binder resin for assisting in forming a coating film on the surface of the substrate, if necessary. The binder resin may be directly added to the aforementioned surface treatment liquid for a substrate, or the binder resin may be previously added to the aforementioned aqueous dispersion of pigments. As examples of the binder resin, mention may be made of natural resins or various synthetic resin-based emulsions. As examples of the natural resin-based binder resin, mention may be made of rosin, shellac, casein, cellulose derivatives, and starch. As examples of the synthetic resin-based emulsion, mention may be made of emulsions formed from a polyvinyl acetate; a copolymer of ethylene and vinyl acetate; a copolymer of vinyl acetate and acrylic ester; a copolymer of vinyl acetate and acrylic acid; a copolymer of ethylene and acrylic acid; a polyvinyl alcohol; an acrylic resin; an acrylic ester resin derived from acrylic ester such as methyl acrylate,

ethyl acrylate, butyl acrylate, 2-ethylhexyl acrylate, or the like; a copolymer of styrene and acrylic ester; a methacrylic ester resin; a copolymer of acrylic acid and methacrylic acid; a silicone-modified acrylic resin; an epoxy resin; a fluorine resin; a polyurethane resin; a mixture thereof, or a copolymer thereof, and the like. In particular, since the obtained coating film exhibits superior durability, an emulsion of an acrylic ester resin or a methacrylic ester resin is preferable. In particular, an acryl silicone-based emulsion having an acrylic ester or a methacrylic ester as a main component is preferable. In addition, the acid value of the binder resin is preferably less than 50, more preferably less than 30, and in particular, preferably 10 or less. As examples of commercially available products as the preferable binder resin, mention may be made of Polysol AP-609 L (product name, an emulsion of an acrylic ester resin manufactured by Showa Highpolymer Co., Ltd.), and Polysol AP-3900 (product name, an acryl silicone-based emulsion manufactured by Showa Highpolymer Co., Ltd.).

In the aforementioned surface treatment liquid for a substrate, additives such as a leveling agent, a surfactant, a silane coupling agent, and the like can be further added, if necessary.

As the leveling agent, a silicone oil is preferable, and various silicone oils can be employed. In particular, a polyether-modified silicone oil is preferable. As examples thereof, mention may be made of, for example, organopolysiloxanes having structures such as polyethylene oxide, polypropylene oxide, polybutylene oxide, a polyethylene oxide-polypropylene oxide copolymerization block, a polyethylene oxide-polybutylene oxide copolymerization block, a polypropylene oxide-polybutylene oxide copolymerization block, and the like at the terminal or in the side chain of the molecular chain. In particular, an organopolysiloxane in which polyethylene oxide, polypropylene oxide, or a polyethylene oxide-polypropylene oxide copolymerization block is bonded to a silicon atom via an alkylene group is preferable. The aforementioned polyether-modified silicone oils can be prepared by means of a conventional method, and for example, they can be prepared by the method described in Japanese Unexamined Patent Application, First Publication No. H09-165318. As the aforementioned polyether-modified silicone oils, there are TSF 4445 or TSF 4446 (product names) (both manufactured by GE Toshiba Silicones Co., Ltd.), KF-352 or KF-353 (product names) (both manufactured by Shin-Etsu Chemical Co., Ltd.), and SH 3746 (product name) (manufactured by Dow Corning Toray Silicone Co., Ltd.).

In addition, a silane compound having an amino group, an epoxy group, or a methacryloxy group, that is a so-called a silane coupling agent, can also be blended. The aforementioned coupling agent can improve hardness of a layer containing a metal-doped titanium oxide or adhesiveness with the layer adjacent thereto. In addition, a material selected from a silicone gum, a silicone powder, a silicone resin, and the like may also be blended in the surface treatment liquid for a substrate of the present invention.

Therefore, as examples of the surface treatment liquid for a substrate of the present invention, mention may be made of the liquids described below:

(1) a liquid containing the aforementioned specified metal-doped titanium oxide and the silane-based water repellent or water-absorption inhibitor;
(2) a liquid containing pigments and/or a dye in addition to the aforementioned (1);
(3) a liquid containing the aforementioned specified metal-doped titanium oxide and the siliconate-based water repellent or water-absorption inhibitor;
(4) a liquid containing pigments and/or a dye in addition to the aforementioned (3);
(5) a liquid containing the aforementioned specified metal-doped titanium oxide and the silicone/silane composite-based water repellent or water-absorption inhibitor;
(6) a liquid containing pigments and/or a dye in addition to the aforementioned (5);
(7) a liquid containing the aforementioned specified metal-doped titanium oxide and the silicone-based water repellent or water-absorption inhibitor;
(8) a liquid containing pigments and/or a dye in addition to the aforementioned (7);
(9) a liquid containing a binder resin in addition to the aforementioned (2), (4), (6), and (8);
(10) a liquid containing the aforementioned specified metal-doped titanium oxide and the fluorine-based water repellent or water-absorption inhibitor; and
(11) a liquid containing pigments and/or a dye, as well as, a binder resin in addition to the aforementioned (10).

Any one of the aforementioned liquids (solution or dispersion) is applied on the surface of the substrate, and thereby, the surface of the substrate is treated. As a method for applying to the substrate, for example, a conventional method such as a brush coating method, a roll coating method, a spray coating method, or the like can be employed. After the treatment liquid of the present invention is applied to the surface of the substrate, the treatment liquid is dried. Thereby, a layer exhibiting superior water repellency or unsusceptibility to water absorption, and antifouling properties can be provided on the surface of the substrate and/or in the surface layer of the substrate. Thereby, contamination of the surface of the substrate can be reduced, and in the case of a porous substrate, penetration of water into the inside of the substrate can be prevented.

In the following, the present invention is described in detail based on examples.

Reference Example 1: Preparation of Copper-Doped Amorphous Type Titanium Oxide

0.463 g of 97% $CuCl_2 \cdot 2H_2O$ (copper chloride) (manufactured by Nihon Kagaku Sangyo Co., Ltd.) was completely dissolved in 500 ml of purified water. Subsequently, 10 g of a 50% titanium tetrachloride solution (manufactured by Sumitomo Sitix Co., Ltd.) was further added thereto. Purified water was added thereto so that the total volume was made up to 1000 ml.
Aqueous ammonia obtained by diluting 25% aqueous ammonia (manufactured by Takasugi Pharmaceutical Co., Ltd.) with purified water by a factor of 10 was added to the aforementioned solution dropwise to adjust the pH to 7.0. Thereby, a mixture of copper hydroxide and titanium hydroxide was precipitated.
The aforementioned precipitate was continually washed with purified water until the conductivity of the supernatant was not more than 0.8 mS/m. As a result, 340 g of an aqueous dispersion containing 0.85% by weight of copper hydroxide and titanium hydroxide in total was obtained.
Subsequently, 25 g of hydrogen peroxide having a concentration of 35% by weight (manufactured by Taiki Chemical Industries Co., Ltd.) was added to the aforementioned aqueous dispersion while cooling to 1 to 5°C. The mixture was stirred for 16 hours. Thereby, 365 g of a transparent green dispersion of copper-doped amorphous-type titanium peroxide with a concentration 0.9% by weight was obtained.

Reference Example 2: Preparation of Zinc-Doped Amorphous Type Titanium Oxide

0.3359 g of $ZnCl_2$ (zinc chloride) was completely dissolved in 500 g of purified water. Subsequently, 10 g of a 50% titanium tetrachloride solution (manufactured by Sumitomo Sitix Co., Ltd.) was further added thereto. Purified water was added thereto so that the total volume was made up to 1000 ml.
Aqueous ammonia obtained by diluting 25% aqueous ammonia (manufactured by Takasugi Pharmaceutical Co., Ltd.) with purified water by a factor of 10 was added to the aforementioned solution dropwise to adjust the pH to 7.0. Thereby, a mixture of zinc hydroxide and titanium hydroxide was precipitated.
The aforementioned precipitate was continually washed with purified water until the conductivity of the supernatant was not more than 0.713 mS/m (the target value was not more than 0.8 mS/m). As a result, 409 g of an aqueous dispersion containing 0.48% by weight of copper hydroxide and titanium hydroxide in total was obtained.
Subsequently, 25 g of hydrogen peroxide having a concentration of 35% by weight (manufactured by Taiki Chemical Industries Co., Ltd.) was added while the aforementioned aqueous dispersion was cooled to 1 to 5°C. The mixture was stirred for 16 hours. Thereby, 434 g of a transparent brownish yellow dispersion of zinc-doped amorphous-type titanium peroxide was obtained.

Reference Example 3: Preparation of Water-Absorption Inhibitor S

20 parts by weight of n-hexyltriethoxysilane, 10 parts by weight of an organosiloxane represented by the formula shown below:

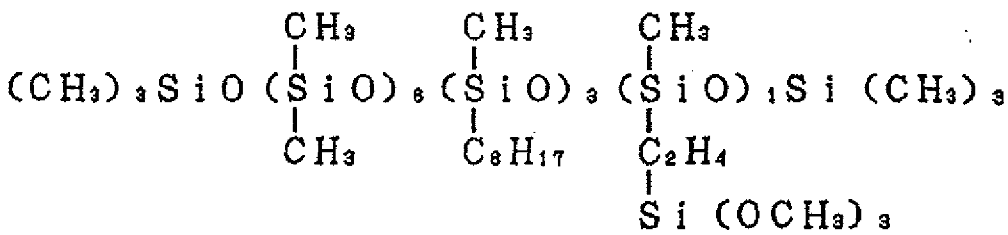

having a viscosity of 21 cS, 0.5 parts by weight of sodium polyoxyethylene (2 mol) lauryl ether sulfate, 0.05 parts by weight of sodium oleate, and 69.45 parts by weight of ion-exchanged water were mixed. The obtained mixture was placed in a homogenizer, and was passed through the homogenizer twice under a pressure of 300 $kg/cm^2$. Thereby, an opaque white water-absorption inhibitor S having a pH of 6.9 was obtained.

Reference Example 4: Preparation of Water-Absorption Inhibitor C

200 parts by weight of a 50% by weight aqueous solution of sodium hydroxide was slowly added to 350 parts

by weight of methyltrimethoxysilane. After 450 parts by weight of distilled water was added to the aforementioned mixture, the produced methanol was removed by distillation. In addition, distilled water was further added thereto in order to adjust the solid content. Thereby, a water-absorption inhibitor C containing 30% by weight of sodium methylsiliconate was obtained.

Example 1

The dispersion of copper-doped amorphous-type titanium peroxide with the concentration of 0.85% by weight, prepared in the aforementioned Reference Example 1, and the water-absorption inhibitor S prepared in the aforementioned Reference Example 3 were mixed in a volume ratio of 4:1, and stirred. Thereby, a surface treatment liquid 1 for a substrate was obtained.

Example 2

The dispersion of copper-doped amorphous-type titanium peroxide with the concentration of 0.85% by weight, prepared in the aforementioned Reference Example 1, and the water-absorption inhibitor C prepared in the aforementioned Reference Example 4 were mixed in a volume ratio of 6:1, and stirred. Thereby, a surface treatment liquid 2 for a substrate was obtained.

Example 3

An aqueous dispersion of pigments containing titanium oxide which was pigments (65 parts by weight of titanium oxide, 19.5 parts by weight of an acryl styrene resin having an acid value of 195, and 15.5 parts by weight of water) (8 parts by weight), and Polysol A-609 L (product name) (manufactured by Showa Highpolymer Co., Ltd.) which was an emulsion of an acrylate resin (10 parts by weight) as a binder resin were mixed with the aforementioned surface treatment liquid 1 for a substrate prepared in the aforementioned Example 1 (85 parts by weight). The mixture was stirred, and thereby, a surface treatment liquid 3 for a substrate was obtained.

Example 4

In the same manner as described in the aforementioned Example 3, a surface treatment liquid 4 for a substrate containing the pigments and the binder resin was obtained, with the proviso that the surface treatment liquid 2 for a substrate prepared in the aforementioned Example 2 was employed instead of the surface treatment liquid 1 for a substrate employed in the aforementioned Example 3.

Example 5

The dispersion of zinc-doped amorphous-type titanium peroxide prepared in the aforementioned Reference Example 2 and the water-absorption inhibitor S prepared in the aforementioned Reference Example 3 were mixed in a volume ratio of 4:1, and stirred. Thereby, a surface treatment liquid 5 for a substrate was obtained.

Evaluation Tests

Evaluation tests were carried out by employing the aforementioned surface treatment liquids 1 to 5 for a substrate as Examples, the dispersion of copper-doped amorphous-type titanium peroxide prepared in the aforementioned Reference Example 1 as Comparative Liquid 1, and the water-absorption inhibitors S and C prepared in the aforementioned Reference Examples 3 and 4 as Comparative Liquids 2 and 3, respectively.

Evaluation Test 1

As a substrate, a commercially available PC concrete paving stone block (300 mm × 300 mm × 50 mm) was employed. Each of the aforementioned surface treatment liquids 1 to 5 for a substrate and Comparative Liquids 1 to 3 was applied to 1/2 of the surface of the paving stone block with a brush, and was dried at room temperature, thus preparing a sample for evaluation. The samples for evaluation were exposed outdoors by setting the face to which the surface treatment liquid for a substrate or the comparative liquid was applied, and facing south by inclining at 75°. The exposure was carried out at Fujitsu-gun in Saga prefecture in Japan from April, 2004, to December, 2004.

The surface of the sample for evaluation after exposure was subjected to visual observation, and antifouling properties of each of the samples were evaluated. In addition, purified water was sufficiently sprayed on the surface of

the sample for evaluation after exposure, and was allowed to stand for about 10 minutes. Subsequently, each of the samples was cut. The degree of penetration of water into the inside from the surface of the sample at the cross section was subjected to visual observation. Thereby, unsusceptibility to water absorption of each of the samples were evaluated. The evaluation results were judged on the basis of the evaluation criteria described below. The obtained results are shown in Table 1.

Antifouling Properties:

Antifouling properties were evaluated on the basis of the test result of the PC concrete paving stone block which had not been subjected to exposure outdoors:

○○ indicated that no difference between the sample for evaluation and the control sample was not observed; ○ indicated that a slight change in color was observed in the sample for evaluation, but adhesion of contamination was not observed; Δ indicated that a change in color and adhesion of slight contamination was observed; and × indicated that a change in color was observed in the sample for evaluation and increased adhesion of contamination was observed. Here, "change in color" means that the surface of the PC concrete paving stone block which was initially bluish gray was degraded to exhibit slightly reddish white (beige to cream color) by repeating the absorption of water and drying during exposure outdoors.

Uncusceptibility to water absorption:

○○ indicated that no penetration of water from the surface of the sample for evaluation into the inside was observed; ○ indicated that a slight penetration of water into the extremely surface layer part of the sample for evaluation was observed; and × indicated that a clear penetration of water from the surface of the sample for evaluation into the inside was observed.

Table 1

| Sample No. | Surface treatment liquid for a substrate | Unsusceptibility to water absorption | Antifouling properties |
|---|---|---|---|
| 1 | Treatment Liquid 1 | ○○ | ○○ |
| 2 | Treatment Liquid 2 | ○ | ○ |
| 3 | Treatment Liquid 3 | ○○ | ○○ |
| 4 | Treatment Liquid 4 | ○ | ○ |
| 5 | Treatment Liquid 5 | ○ | ○ |
| 6 | Comparative Liquid 1 | × | ○○ |
| 7 | Comparative Liquid 2 | ○○ | Δ |
| 8 | Comparative Liquid 3 | ○ | Δ |

From the results shown in Table 1, it can be seen that in the case of treating the substrate with the treatment liquid for the surface containing the copper-doped or zinc-doped titanium oxide, and the water-absorption inhibitor or the water repellent, unsusceptibility to water absorption and antifouling properties can be provided on the substrate at the same time.

Example 6: Test of Fading Red Ink

Coloration of the substrate of which the surface was treated with the aforementioned surface treatment liquid for a substrate was carried out with an organic dye, and a rate of fading the organic dye due to photo-oxidation was measured. The test was carried out in the manner described below.
As a substrate, a white ceramic tile having a size of 100 mm × 100 mm (manufactured by Danto Corporation) was employed. Evaluation was carried out in 7 types of samples described below.

(1) No surface treatment of the substrate was carried out.
(2) Surface treatment of the substrate with B56 (photocatalyst, manufactured by Sustainable Technology Incorporated) was carried out.
(3) The surface of the substrate was treated with a liquid in which 0.1 parts by weight of SH 3746 M (product name, manufactured by Dow Corning Toray Silicone Co., Ltd.) as a leveling agent was added to 100 parts by weight of the dispersion of copper-doped amorphous-type titanium oxide of the aforementioned Reference Example 1.
(4) The surface of the substrate was treated with the dispersion of copper-doped amorphous-type titanium oxide of the aforementioned Reference Example 1.
(5) The surface of the substrate was treated with the water-absorption inhibitor S of the aforementioned Reference Example 3.
(6) The surface of the substrate was treated with the surface treatment liquid 1 for a substrate of the aforementioned Example 1.
(7) The surface of the substrate was treated with the surface treatment liquid 3 for a substrate of the aforementioned Example 3.

The aforementioned surface treatment of the substrate was carried out by spray-coating the surface of the substrate by means of a spray gun (manufactured by Meiji-Machine Co., Ltd.) with each of the treatment liquids in an amount ranging from 15 g/cm$^2$ to 20 g/cm$^2$, subsequently drying, and subsequently heating in a thermostatic and humidity-constant container for 15 minutes at 80°C.
Subsequently, onto the substrates which had been subjected to the surface treatment (the aforementioned (1) to (7)), a diluted solution obtained by diluting a commercially available red ink (manufacture by Pilot Corporation) by a factor of 10 with ethanol was sprayed with an application amount of 0.001 g/100 cm$^2$ per application seven times, followed by drying. Evaluation was carried out in the method described below.

Evaluation Method

The aforementioned samples (1) to (7) of the surface-treated materials of which the surface had been colored with the red ink were arranged in line under a 20 W black light (manufactured by Toshiba Lighting & Technology Corporation). Ultraviolet radiation was exposed on the surface of the sample which had been colored with the red ink. The intensity of ultraviolet radiation was 1,100 μW/cm$^2$. A rate of fading the red ink on the surface of the sample was measured over time by means of a colorimeter (CR-200, manufactured by Minolta).
The rate (%) of fading the red ink was calculated by the equation described below.
$$\text{Fading rate} = 100 - 100 \times \sqrt{((L2 - L0)^2 + (a2 - a0)^2 + (b2 - b0)^2)} / \sqrt{((L1 - L0)^2 + (a1 - a0)^2 + (b1 - b0)^2)}$$

Color of the surface of each of the samples before the surface was colored with the red ink: L0, a0, b0
Color of the surface of each of the samples after the surface was colored with the red ink (initial values): L1, a1, b1
Color of the surface of each of the samples after irradiation with ultraviolet radiation: L2, a2, b2

The results of the obtained fading rate are shown in Table 2. In the table, the period of irradiation with ultraviolet radiation after the test and the fading rate of the red ink on the surface of the sample are indicated by numerical values (%). It is shown that as the numerical value of the fading rate in the table is increased, fading of the red ink is remarkably increased.

Table 2

| Sample No. | Period of irradiation with ultraviolet radiation | | | | | | |
|---|---|---|---|---|---|---|---|
| | 0 hr | 22 hr 55 min | 17 hr 15 min | 26 hr 10 min | 41 hr | 50 hr 5 min | 64 hr 45 min |
| 1 | 0 | -4.5 | -4.2 | 23.4 | 81.8 | 92.3 | 94.3 |
| 2 | 0 | 57.3 | 77.0 | 84.3 | 92.0 | 94.3 | 95.4 |
| 3 | 0 | 4.5 | 19.3 | 29.8 | 43.1 | 51.5 | 60.0 |
| 4 | 0 | 3.3 | 9.0 | 13.8 | 20.7 | 24.8 | 29.7 |
| 5 | 0 | 31.9 | 33.6 | 38.0 | 24.1 | 38.6 | 39.9 |
| 6 | 0 | -2.4 | -0.3 | 3.1 | 2.1 | 5.6 | 4.3 |
| 7 | 0 | -3.4 | -0.8 | -1.2 | 3.5 | 5.0 | 8.3 |

From the results shown in the table, it can be seen that samples (6) and (7) have a reduced rate of fading the red ink, compared to samples (1) to (5), and therefore, a degree of degradation of red ink pigments caused by ultraviolet radiation is reduced.

Example 7

32.1 parts by weight of the dispersion of copper-doped amorphous-type titanium oxide with a concentration of 0.85% by weight prepared in the aforementioned Reference Example 1, 7.6 parts by weight of the water-absorption inhibitor S prepared in the aforementioned Reference Example 3, 1.2 parts by weight of an aqueous dispersion of pigments containing monoazo red-type organic pigments (25 parts by weight of Pigment Red 17, 7.5 parts by weight of polyoxyethylene nonyl phenyl ether having an HLB of 14.1, and 67.5 parts by weight of water), and 10 parts by weight of Polysol A-609 L (product name) (manufactured by Showa Highpolymer Co., Ltd.) which was an emulsion of an acrylate resin, as a binder resin, were mixed, and the mixture was stirred. Thereby, the surface treatment liquid 6 for a substrate was obtained.

Comparative Example 4

A surface treatment liquid 7 for a substrate was obtained in the same manner as described in Example 7, with the exception of employing 32.1 parts by weight of purified water instead of 32.1 parts by weight of the dispersion of copper-doped amorphous-type titanium peroxide with a concentration of 0.85% by weight prepared in Reference Example 1.

Comparative Example 5

A surface treatment liquid 8 for a substrate was obtained in the same manner as described in Example 8, with the exception of employing 7.6 parts by weight of purified water instead of 7.6 parts by weight of the water-absorption inhibitor S prepared in Reference Example 3.

Evaluation Test 3

As a substrate, a white ceramic tile having a size of 100 mm × 100 mm (manufactured by Danto Corporation) was employed. A sample for evaluation was prepared by brush-coating the surface of the tile with each of the aforementioned surface treatment liquids 6 to 8 for a substrate, and drying at room temperature. In the samples for evaluation, a part of the surface to which the surface treatment liquid for a substrate was applied was subjected to masking to provide a non-irradiation part. Subsequently, a test of accelerated weather resistance for 600 hours was carried out by

means of a sunshine weather meter of WEL-SUN-HCH·B type (black panel temperature = 63°C) manufactured by Suga Test Instruments Co., Ltd.

At the surface of each of the samples for evaluation after the test of the accelerated weather resistance, the color difference of the irradiated part on the basis of the non-irradiated part which had been subjected to masking was measured by means of a spectral photometer of Macbeth Color Eye CE-7000 A. The obtained results are shown in Table 3.

Table 3

| | Example 7 | Comparative Example 4 | Comparative Example 5 |
|---|---|---|---|
| Surface treatment liquid for a substrate | 6 | 7 | 8 |
| Color difference | 7.5 | 19 | 10.5 |

From the results shown in Table 3, it can be seen that in the case of treating the substrate with the surface treatment liquid for a substrate containing the water repellent inhibitor or water-absorption inhibitor, copper-doped titanium oxide, and pigments, the fading of the pigments contained in the surface treatment liquids for a substrate, caused by ultraviolet radiation can be reduced, compared with the case of treating the substrate with a surface treatment liquid for a substrate containing copper-doped titanium oxide and pigments, or the case of treating the substrate with the surface treatment liquid for a substrate containing only pigments.

[BRIEF DESCRIPTION OF DRAWINGS]

[Fig. 1]
Fig. 1 is a drawing showing an outline of an example of a method for preparing a specified metal-doped titanium oxide of the present invention.

## Claims

1. A solution or dispersion **characterized by** comprising: titanium oxide doped with at least one metal element selected from the group consisting of copper, manganese, nickel, cobalt, iron, and zinc, and a water repellent or a water-absorption inhibitor.

2. The solution or dispersion according to claim 1, wherein said water repellent or water-absorption inhibitor is a silane-based, siliconate-based, silicone-based, silicone and silane composite-based, and/or fluorine-based water repellent or water-absorption inhibitor, and said titanium oxide doped with the metal element is an amorphous-type titanium oxide or an amorphous-type titanium oxide of which at least one part is peroxidized.

3. The solution or dispersion according to claim 1 or 2, further comprising an aqueous dispersion which contains a pigment, water, and one or more dispersants selected from the group consisting of a nonionic dispersant, an anionic dispersant, an amphoteric dispersant, and a resin dispersant.

4. A method for treating a surface of a substrate, **characterized by** applying the solution or dispersion as recited in claim 1 or 2 to the substrate to provide a layer containing said water repellent or water-absorption inhibitor, as well as, titanium oxide doped with at least one metal element selected from the group consisting of copper, manganese, nickel, cobalt, iron, and zinc, on the surface of said substrate and/or in a surface layer of said substrate.

5. A surface-treated material **characterized in that** the material is prepared by means of the method for treating the surface as recited in claim 4, and a layer containing the water repellent or water-absorption inhibitor, as well as, titanium oxide doped with at least one metal element selected from the group consisting of copper, manganese, nickel, cobalt, iron, and zinc, is provided on the surface of the substrate and/or in the surface layer of the substrate.

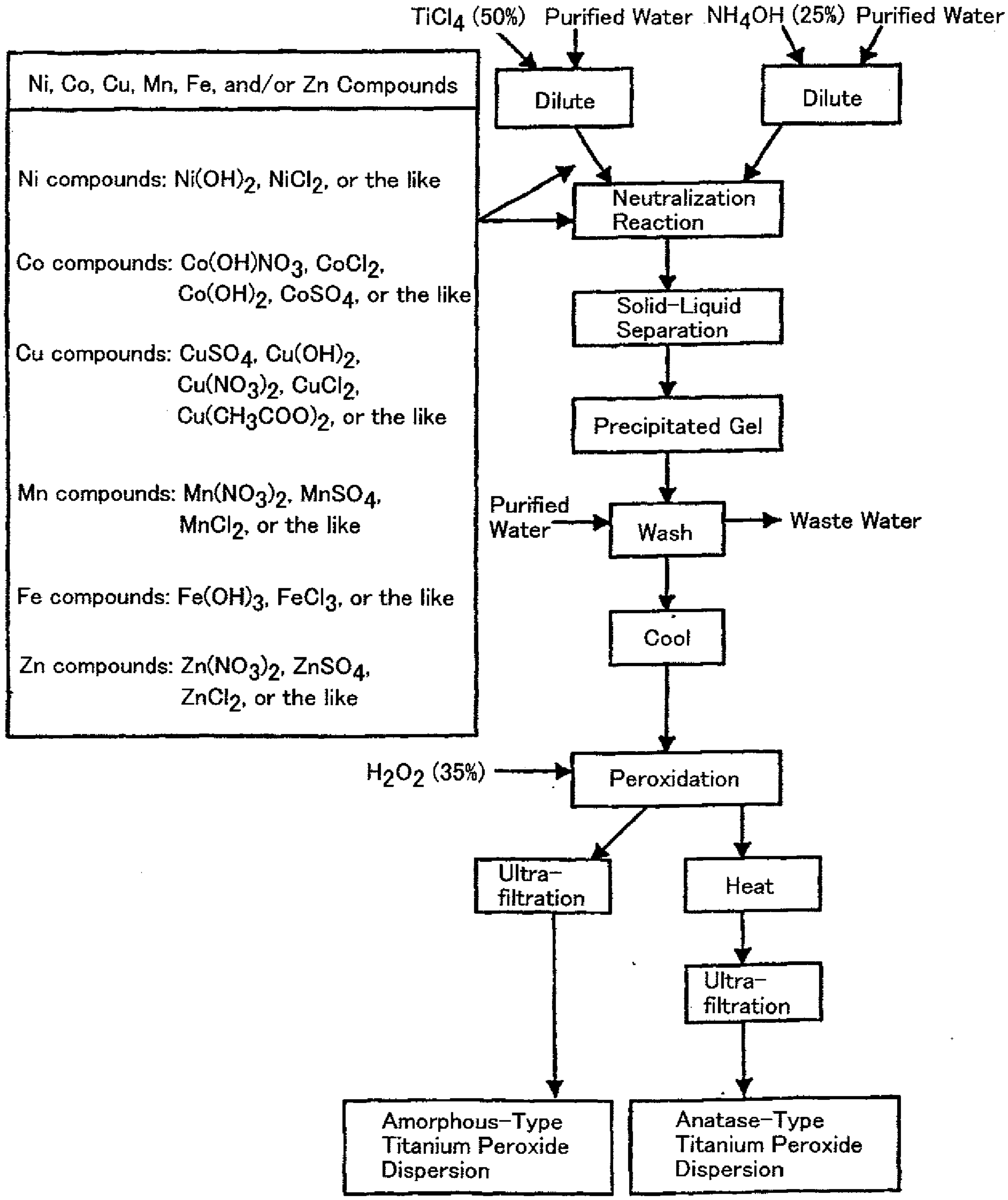

TiCl4 (50%)
Purified Water
NH4OH (25%)
Purified Water
Ni, Co, Cu, Mn, Fe, and/or Zn Compounds
Ni compounds: Ni(OH)2, NiCl2, or the like
Co compounds: Co(OH)NO3, CoCl2, Co(OH)2, CoSO4, or the like
Cu compounds: CuSO4, Cu(OH)2, Cu(NO3)2, CuCl2, Cu(CH3COO)2, or the like
Mn compounds: Mn(NO3)2, MnSO4, MnCl2, or the like
Fe compounds: Fe(OH)3, FeCl3, or the like
Zn compounds: Zn(NO3)2, ZnSO4, ZnCl2, or the like
Dilute
Dilute
Neutralization Reaction
Solid-Liquid Separation
Precipitated Gel
Purified Water
Wash
Waste Water
Cool
H2O2 (35%)
Peroxidation
Ultra-filtration
Heat
Ultra-filtration
Amorphous-Type Titanium Peroxide Dispersion
Anatase-Type Titanium Peroxide Dispersion


FIG.1

**INTERNATIONAL SEARCH REPORT**

International application No.
PCT/JP2006/308434

A. CLASSIFICATION OF SUBJECT MATTER
***C09D183/04***(2006.01), ***C09D5/16***(2006.01), ***C09D7/12***(2006.01), ***C09K3/18***(2006.01)

According to International Patent Classification (IPC) or to both national classification and IPC

B. FIELDS SEARCHED

Minimum documentation searched (classification system followed by classification symbols)
C09D183/04, C09D5/16, C09D7/12, C09K3/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2004/041723 A1 (Sustainable Technology Inc.), 21 May, 2004 (21.05.04), Full text & EP 1564185 A1 & US 2005/271892 A1 | 1-5 |
| Y | JP 62-197369 A (PCR, Inc.), 01 September, 1987 (01.09.87), Full text & US 4648904 A & EP 234024 A1 | 1-5 |
| Y | JP 6-313167 A (Dow Corning Toray Silicone Co., Ltd.), 08 November, 1994 (08.11.94), Full text (Family: none) | 1-5 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 03 July, 2006 (03.07.06) | 11 July, 2006 (11.07.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/308434

C (Continuation). DOCUMENTS CONSIDERED TO BE RELEVANT

| Category* | Citation of document, with indication, where appropriate, of the relevant passages | Relevant to claim No. |
|---|---|---|
| Y | JP 5-214251 A (General Electric Co.), 24 August, 1993 (24.08.93), Full text & US 5178668 A & EP 531134 A1 | 1-5 |
| Y | JP 58-118853 A (Dow Corning Corp.), 15 July, 1983 (15.07.83), Full text & US 4427811 A & EP 83153 A1 | 1-5 |
| Y | JP 60-96650 A (Toray Silicone Co., Ltd.), 30 May, 1985 (30.05.85), Full text & US 4535109 A & EP 143541 A1 | 1-5 |
| Y | JP 7-150045 A (Dow Corning Corp.), 13 June, 1995 (13.06.95), Full text & US 5438095 A & US 5895794 A & US 5624997 A | 1-5 |
| Y | JP 55-48245 A (Toray Silicone Co., Ltd.), 05 April, 1980 (05.04.80), Full text (Family: none) | 1-5 |
| Y | JP 5-124880 A (Asahi Glass Coat & Resin Co., Ltd.), 21 May, 1993 (21.05.93), Full text (Family: none) | 1-5 |
| Y | JP 5-117578 A (Asahi Glass Co., Ltd.), 14 May, 1993 (14.05.93), Full text (Family: none) | 1-5 |
| Y | JP 5-179191 A (Asahi Glass Co., Ltd.), 20 July, 1993 (20.07.93), Full text (Family: none) | 1-5 |
| Y | JP 2003-26461 A (Sumitomo Seika Chemicals Co., Ltd.), 29 January, 2003 (29.01.03), Full text (Family: none) | 1-5 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005125152 A
- JP 2000135442 A
- JP 2002138243 A
- WO 200404173 A
- WO 2004041723 A
- JP 2000159786 A
- JP 2001010816 A
- JP S62197369 A
- JP H06313167 A
- JP H05214251 A
- JP S58118853 A
- JP S6096650 A
- JP H07150045 A
- JP S5548243 A
- JP H0673291 A
- JP H05124880 A
- JP H05117578 B
- JP H05179191 A
- JP 2000121543 A
- JP 2003026461 A
- JP H09165318 A